Europäisches Patentamt

European Patent Office

Office européen des brevets

(19)

(11) Numéro de publication: **0 011 524**

**A1**

(12)

# DEMANDE DE BREVET EUROPEEN

(21) Numéro de dépôt: **79400736.9**

(22) Date de dépôt: **11.10.79**

(51) Int. Cl.$^3$: **C 01 B 31/36**

(30) Priorité: **11.10.78 FR 7828965**

(43) Date de publication de la demande:
**28.05.80 Bulletin 80/11**

(84) Etats Contractants Désignés:
**BE CH DE GB IT LU NL SE**

(71) Demandeur: **QUARTZ ET SILICE**
**8, rue d'Anjou**
**F-75008 Paris(FR)**

(72) Inventeur: **Gray, Edgar Garry**
**Parc Croix Marie**
**F-78121 Crespierres(FR)**

(74) Mandataire: **Eudes, Marcel et al,**
**SAINT-GOBAIN RECHERCHE 39 Quai Lucien Lefranc**
**F-93304 Aubervilliers CEDEX(FR)**

(54) **Procédé de fabrication du carbure de bore.**

(57) La présente invention a trait à la fabrication de carbure de bore pulvérulent.

Le procédé de l'invention fait appel à un traitement magnésiothermique pour lequel la charge à traiter est préparée à partir d'une solution d'au moins un composé oxygéné du bore dans laquelle sont dispersés, à l'état pulvérulent, les éventuels composés oxygénés de bore complémentaires et porteurs de carbone non solubles, en une suspension homogène.

L'invention permet une amélioration des rendements de réaction du bore introduit.

EP 0 011 524 A1

Croydon Printing Company Ltd.

Procédé de fabrication du carbure de bore

La présente invention a trait à la fabrication du carbure de bore pulvérulent.

On sait que le carbure de bore, de formule chimique $B_4C$, trouve de nombreuses applications dans l'industrie du fait de sa très grande dureté : ainsi, sous forme de poudre, il est utilisé principalement comme abrasif, notamment pour le rodage et le polissage des métaux et carbures durs, tandis que, à l'état moulé et fritté, il est tout-à-fait approprié à la production de pièces soumises à forte abrasion, telles que buses de sablage, filières, coussinets, etc... Il trouve en outre des applications dans le domaine nucléaire quand il renferme l'isotope $^{10}B$, en tant qu'absorbeur de neutrons ; le coût du produit fini est alors très directement fonction du coût des matières premières apportant le bore, et par conséquent du rendement de fabrication.

On connait de nombreux procédés de fabrication de carbure de bore pulvérulent. Certains doivent faire appel à des fours spéciaux en vue d'atteindre de très hautes températures, permettant d'obtenir un produit fondu qui par conséquent, après refroidissement et prise en masse, exige des opérations complémentaires coûteuses de broyage et de classement granulométrique. Par exemple, selon l'un de ces procédés, on fait réagir ensemble de l'anhydride borique et du coke de pétrole, à une température de l'ordre de 2400 °C, qui correspond sensiblement à la température de fusion du carbure de bore, cette température pouvant être atteinte par exemple en utilisant un résistor de carbone sous atmosphère non oxydante et de préférence réductrice. On obtient ainsi une sorte de lingot d'un produit adhérant au résistor, qu'il est nécessaire de broyer et dans lequel en outre le carbure de bore est généralement souillé de carbone et/ou de bore non combinés.

Evitant les principaux de ces inconvénients, un procédé d'un autre type, décrit par le brevet français n° 1 060 525, comporte essentiellement une phase de formation du carbure de bore dans laquelle on chauffe un mélange contenant, outre du carbone et de l'anhydride borique ou un sel dérivé, une poudre de magnésium ou d'un de ses alliages, à des températures pouvant varier dans une large gamme mais très notablement inférieures à la température de fusion du carbure de bore, et une phase de séparation du carbure de bore obtenu, dans laquelle on effectue un traitement de lessivage par un acide dilué (HCl, $H_2SO_4$, par ex.), suivi d'une filtration. Ce procédé présente l'avantage de ne pas exiger l'emploi des matériels particulièrement performants qui sont nécessaires pour atteindre la température de fusion du carbure de bore.

En outre, il conduit directement, sans broyage ni tamisage, à du carbure de bore sous forme pulvérulente, et dont la granulométrie peut être ajustée en jouant sur les proportions et la présentation des composants du mélange initial.

Cependant, ce procédé n'est pas non plus, sous certains aspects, totalement satisfaisant. Par exemple, du fait de la violence de la réaction, des précautions coûteuses sont à prendre dans les installations industrielles par mesure de sécurité et pour éviter les pertes de matières premières. En outre, il permet difficilement d'obtenir des rendements de réaction de l'anhydride borique introduit qui dépassent des valeurs de l'ordre de 75 %. Or, les porteurs de bore, dans le cas de l'isotope 10, sont d'un prix élevé, et la récupération des matières premières n'ayant pas réagi est coûteuse. Enfin, la poudre de carbure de bore obtenue n'est pas totalement exempte de bore et/ou de carbone non combinés, les teneurs en ces éléments pouvant être, par exemple, respectivement de l'ordre de 3 à 7 % et de 2 à 3 %. De plus, il est difficile de maîtriser totalement la constance de la composition du produit obtenu, et notamment sa stœchiométrie. Une certaine amélioration à cet égard peut être observée lorsqu'on réduit les dimensions des particules des produits en présence, et améliore l'intimité de leur mélange, mais on se trouve rapidement limité dans cette voie par la violence de la réaction d'oxydation du magnésium par le composé oxygéné du bore, ou réaction magnésiothermique.

Un perfectionnement à ce procédé, qui fait l'objet du brevet français 1 378 758, permet de réduire les inconvénients liés à la violence de la réaction en ajoutant aux réactifs un inhibiteur de réaction, tel que l'oxyde de magnésium, l'oxyde de calcium, l'alumine ou la silice. Malheureusement, cette variant exige un traitement thermique de durée beaucoup plus longue, et à des températures plus élevées, et elle augmente le taux d'impureté du produit fini.

On connait aussi un autre type de procédé de fabrication de carbure de bore dans lequel l'acide borique et la source de carbone sont dissous en quantités stœchiométriques dans un solvant approprié. La solution ainsi formée est amenée à siccité, puis les solides résultant sont chauffés de 1800 à 2000 °C pour conduire au carbure de bore. Une variante décrite par le brevet américain 3 885 022, prévoit d'éviter les inconvénients liés à l'abondant dégagement de fumées, de vapeurs et de fines apparaissant lors du chauffage à 1800 °C. A cet effet, on dissout les composés de bore et la source de carbone dans de l'eau et un alcool, puis la solution est amenée à siccité, et le matériau solide obtenu est tout d'abord chauffé en atmosphère d'hydrogène jusqu'à 700 °C pour former un produit granulaire. Ce dernier enfin subit un traitement sous atmosphère inerte jusqu'à au moins 1700 ou 1800 °C. Ce procédé en 3 étapes est relativement compliqué et coûteux, notamment du fait qu'il faut maîtriser les atmosphères, et en raison des températures et durées de traitement nécessaires.

La présente invention a pour objet un procédé de fabrication de carbure de bore pulvérulent, dans lequel la charge, préparée à partir d'une solution contenant au moins un composé oxygéné du bore et un porteur de carbone, est traitée par voie magnésiothermique.

Cette solution renferme donc au moins un composé oxygéné du bore, et contient les porteurs de carbone soit à l'état dissout, soit à l'état pulvérulent, en une suspension homogène, avec d'éventuels composés oxygénés de bore complémentaires non solubles et le cas échéant du magnésium en poudre.

La solution, ou suspension, est amenée à siccité, éventuellement sous un vide partiel, tout en maintenant son homogénéité, par exemple par agitation. Si le magnésium (ou l'un de ses alliages) a été introduit préalablement, la charge est prête à subir la réaction de magnésiothermie dès la fin de l'opération de mise à siccité, ou éventuellement après un léger broyage.

Dans le cas contraire, le produit sec est réduit en poudre de granulométrie appropriée, avant de lui ajouter le magnésium divisé, et de réaliser un mélange très homogène.

Enfin, pour effectuer le traitement magnésiothermique, selon une méthode semblable à celle décrite par le brevet français n° 1 060 525, on porte la charge ainsi préparée à une température supérieure à 700 °C, et de préférence comprise entre 900 et 1700 °C.

Le produit de la réaction est ensuite refroidi à la température ambiante, puis on procède à la séparation du carbure de bore, qui se présente sous forme pulvérulente, par des opérations successives de lixiviation par un acide dilué, de filtration, de lavage et de séchage, comme il est décrit dans le brevet en question.

Pour une fabrication industrielle, le traitement magnésiothermique peut être effectué, par exemple, dans un four tubulaire tournant, de préférence en acier réfractaire, le long duquel la charge se déplace par gravité, sans que des précautions particulières soient à prendre quant aux caractéristiques d'oxydo-réduction de l'atmosphère régnant dans le tube.

On peut aussi disposer la charge dans des nacelles, et effectuer le traitement selon un processus discontinu.

Un tel mode de préparation de la charge conduit à une mise en contact très intime, pratiquement à l'échelle moléculaire, des éléments porteurs de bore et de carbone. Il procure une sensible élévation du rendement de formation du carbure de bore, ainsi qu'une très grande souplesse dans le contrôle des phénomènes d'oxydo-réduction, par action sur la granulométrie des particules de magnésium, des autres composants de la charge, et de la charge amenée à siccité elle-même, paramètres importants de la cinétique de réaction.

Parmi les composés oxygénés du bore utilisables selon l'invention, c'est-à-dire qui, ainsi qu'il a été indiqué plus haut, peuvent être mis en solution, on choisit généralement dans le groupe constitué par l'anhydride borique $B_2O_3$, l'acide borique $BO_3H_3$ et les borates alcalins tels que $B_4O_7Na_2$.

A titre de solvant, on peut faire appel à des glycols, dont le plus économique est l'éthylèneglycol, ou tout simplement à l'eau. Celle-ci cependant présente l'inconvénient d'hydrater $B_2O_3$ en $BO_3H_3$,

5

et la déshydratation à effectuer lors de l'opération ultérieure de mise à siccité est alors plus laborieuse et coûteuse qu'avec les glycols.

A titre de porteur de carbone, on peut choisir soit un carbone pulvérulent très fin, comme le noir de fumée, qui doit être mis en suspension dans la solution du composé oxygéné du bore, soit un composé de carbone soluble dans le solvant du porteur de bore, et de préférence un composé organique, tel qu'un hydrate de carbone (saccharose, amidon), susceptible de se dégrader en carbone à une température relativement peu élevée, lors de la mise à siccité.

Des exemples de réalisation sont maintenant donnés à titre d'illustration de divers modes de mise en oeuvre et avantages de l'invention.

Exemple 1 -

On fabrique une suspension en mélangeant successivement les constituants suivants :

| | |
|---|---|
| anhydride borique $(B_2O_3)$ | 2 kg |
| éthylèneglycol | 0,7 litre |
| noir de fumée | 0,17 kg |

On chauffe cette suspension dans une étuve à 250 °C, tout en la soumettant à une agitation continue jusqu'à la prise en masse. Au bout de 4 heures environ, on refroidit la masse solide obtenue, et on la soumet à des traitements successifs de broyage et tamisage, afin de conduire à une matière pulvérulente passant en totalité au tamis 60, de maille 0,3 mm. Cette poudre est alors mélangée, de façon très intime, à 2,15 kg de poudre de magnésium de granulométrie comprise entre 80 et 200 $\mu$m.

On place ce mélange dans un récipient en réfractaire silico-alumineux, et on l'introduit dans un four porté à 900 °C.

La réaction magnésiothermique provoque une sensible élévation de la température du four au-delà de la température de 900 °C affichée sur le régulateur, et environ 3 à 5 minutes après le début ainsi détecté de la réaction, on retire le récipient du four, pour un refroidissement à l'air libre du produit de la réaction. Celui-ci est ensuite soumis à un traitement de lixiviation par l'acide sulfurique dilué à 30 % en poids. Puis, par filtration et lavage, on sépare de la solution obtenue 0,713 kg d'une poudre d'environ 1 $\mu$m dont la teneur en bore combiné sous forme de carbure est de 76,5 %, ce qui correspond à un rendement de réaction du bore introduit de 87,8 %. Ce produit ne contient que peu d'impuretés (environ 2 %),
représentées essentiellement par du carbone et du bore non combinés,
en proportions pondérales sensiblement égales.

Exemple 2 -

On fabrique une solution à l'aide des constituants suivants :

| anhydride borique | 2,00 kg |
| saccharose | 0,43 kg |
| éthylèneglycol | 0,65 litre |

On porte cette solution dans un four à moufle à 300 °C tout
en l'agitant pour en éliminer le solvant. Au bout de 6 heures environ, on laisse refroidir la masse solide obtenue, on la réduit en
une poudre passant au tamis 60, et on la mélange intimement à 2,15
kg de poudre de magnésium de 60 à 100 µm. On effectue le traitement
magnésiothermique de la manière décrite dans l'exemple précédent.
Puis par lixiviation par l'acide sulfurique dilué, lavage et filtration, on recueille 0,752 kg d'une poudre dont la teneur en bore combiné sous forme de carbure est de 77,2 %, ce qui correspond à un
rendement de réaction de 93,4 %, avec moins de 0,3 % de carbone libre et de 0,8 % de bore non combiné.

Exemple 3 -

On fabrique une suspension à l'aide de :

| anhydride borique | 1 kg |
| saccharose | 0,22 kg |
| magnésium (poudre de 60/100 µm) | 1,1 kg |
| éthylèneglycol | 0,325 litre |

On chauffe dans une étuve à 180 °C, avec agitation continue
du liquide jusqu'à élimination du solvant et obtention d'une masse
d'aspect vitreux, obtenues en 10 heures environ.

On soumet ensuite cette masse au traitement magnésiothermique
de la même manière que dans les exemples précédents, mais sans lui
faire subir aucune opération préalable de broyage ou tamisage.

Puis, on effectue les traitements de lixiviation à l'acide
sulfurique, lavage et tamisage. On recueille à l'issue de ces opérations 0,382 kg d'une poudre dont la teneur en bore combiné est de
77,8 %, ce qui correspond à un rendement de réaction de 95,6 % environ.

Exemple 4 -

On fabrique une solution à l'aide de :

7

| acide borique ($BO_3H_3$) | 3,550 kg |
|---|---|
| saccharose | 0,435 kg |
| eau | 12 litres |

On porte cette solution dans une étuve sous dépression, et on monte la température de 100 à 400 °C en 30 heures par paliers de 10 °C.

La masse d'aspect vitreux obtenue est réduite en grains passant au tamis 60, puis mélangée à 3,7 kg de poudre de magnésium de 80/200 $\mu$m.

Après réaction magnésiothermique, puis séparation du carbure de bore selon les méthodes des exemples précédents, on recueille 0,695 kg de poudre titrant 76,1 % de bore combiné en carbure, ce qui correspond à un rendement de 85,1 % environ. Sa granulométrie est de l'ordre de 1 $\mu$m comme dans les exemples précédents.

Dans tous les cas, on constate que la réaction magnésiothermique s'effectue facilement et sans brutalité. Le rendement de réaction du porteur de bore est très amélioré, par rapport aux procédés magnésiothermiques antérieurs, les meilleurs rendements étant obtenus lorsque les porteurs de bore et de carbone sont l'un et l'autre mis en solution. Parallèlement, les taux d'impuretés se trouvent réduits, ce qui est généralement recherché pour les applications de $B_4C$. Ainsi, les opérations de frittage de la poudre de carbure de bore obtenue sont favorablement influencées par la réduction des teneurs en bore libre.

Enfin, une bonne reproductibilité des résultats est obtenue aisément, ce qui constitue pour la mise en oeuvre industrielle du procédé un avantage très important.

Par rapport aux procédés utilisant la réduction directe par le carbone, le présent procédé est très avantageux quant aux températures et durées de traitement, au rendement de la réaction, ainsi qu'en matière de contrôle de l'atmosphère du four de traitement.

1

REVENDICATIONS

1. Procédé de fabrication de carbure de bore pulvérulent par chauffage, à température inférieure au point de fusion de ce corps, d'une charge obtenue à partir d'une solution contenant au moins un composé oxygéné du bore et un porteur de carbone à l'état dissout ou pulvérulent, solution amenée à siccité pour former une masse homogène, caractérisé en ce que du magnésium est apporté à la charge sous forme de métal ou d'alliage et que l'on provoque une réaction magnésiothermique par élévation de la température à un niveau supérieur à 700 °C.

2. Procédé selon la revendication 1, caractérisé en ce que, après avoir amené à siccité la solution, ou éventuellement la suspension homogène, on broie la masse solide obtenue, puis on la mélange à la poudre de magnésium ou d'alliage de magnésium.

3. Procédé selon la revendication 1, caractérisé en ce que la solution, ou éventuellement la suspension, est additionnée de poudre de magnésium, ou d'alliage de magnésium avant d'être amenée à siccité.

4. Procédé selon la revendication 3, caractérisé en ce que la masse amenée à siccité est soumise à un broyage grossier.

5. Procédé selon l'une des revendications 2 à 4, caractérisé en ce que la mise à siccité est réalisée sous un vide partiel.

6. Procédé selon l'une des revendications précédentes, caractérisé en ce que le composé oxygéné soluble de bore est choisi dans le groupe constitué par l'anhydride borique, l'acide borique et les borates alcalins.

7. Procédé selon l'une des revendications précédentes, caractérisé en ce que le solvant utilisé pour fabriquer la solution est choisi dans le groupe des glycols.

8. Procédé selon l'une des revendications précédentes, caractérisé en ce que le carbone est introduit essentiellement sous la forme d'un composé soluble organique susceptible de se dégrader en carbone, de préférence à une température inférieure à celle nécessaire à la mise à siccité.

9. Procédé selon la revendication 8, caractérisé en ce que le composé soluble organique de carbone est un hydrate de carbone.

10. Procédé selon l'une des revendications 1 à 7, caractérisé en ce que le carbone est introduit essentiellement sous forme de noir de carbone.

2

11. Procédé selon l'une des revendications précédentes, caractérisé en ce que, en vue du déclenchement de la réaction de magnésiothermie, on chauffe la charge à une température supérieure à 700 °C et de préférence comprise entre 900 et 1700 °C.

## Office européen des brevets

# RAPPORT DE RECHERCHE EUROPEENNE

Numéro de la demande

EP 79 40 0736

| Catégorie | DOCUMENTS CONSIDERES COMME PERTINENTS | Revendication concernee |
|---|---|---|
| | Citation du document avec indication, en cas de besoin, des parties pertinentes | |
| D | US - A - 3 885 022 (HARRIS)<br>* Colonne 1, lignes 56-58; colonne 2, lignes 1-54 * | 1,2,6-9,11 |
| | FR - A - 1 223 663 (U.S. BORAX & CHEM CO)<br>* Page 3, exemples 1,2 * | 1,6,8-10 |
| | FR - A - 2 165 884 (OSTER. STUDIENGES. FUR ATOMENERGIE G.)<br>* Page 1, lignes 11-20; page 2, lignes 7-31 * | 1,6 |
| D | FR - A - 1 378 758 (K.K. HITACHI SEISAKUSHO)<br>* Page 2, exemple * | 1,6,11 |
| | FR - A - 1 378 759 (K.K. HITACHI SEISAKUSHO)<br>* Page 2, exemples 1,2 * | 1,6,11 |
| | FR - A - 896 823 (SOC. IND. COM. DES ACIERS)<br>* Page 2, lignes 20-55 * | 1,6,11 |
| | DE - C - 408 354 (ELEKTROCHEM. WERKE)<br>* Page 1, lignes 40-55 * | 1,6,8 |
| | -- ./. | |

**CLASSEMENT DE LA DEMANDE (Int. Cl.)**

C 01 B 31/36

**DOMAINES TECHNIQUES RECHERCHES (Int. Cl.)**

C 01 B 31/36

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interference
D: document cité dans la demande
L: document cite pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 11-03-1980 | WENDLING |

OEB Form 1503.1  06.78

Office européen
des brevets

**RAPPORT DE RECHERCHE EUROPEENNE**

| Catégorie | Citation du document avec indication, en cas de besoin, des parties pertinentes | Revendication concernée | CLASSEMENT DE LA DEMANDE (Int. Cl. ³) |
|---|---|---|---|
| | CHEMICAL ABSTRACTS, vol. 53, no. 17, 1959, abrégé no. 15843g, Columbus, Ohio, US, G.V. SAMSONOV: "Magnesiothermal method of making boron carbide" & Ukrain.Khim.Zhur. 24, no. 6, 799-804 (1958) * Abrégé * | 1,6, 10,11 | |
| D | FR - A - 1 060 525 (GRAY) * Page 2, exemples et résumé * | 1,6,11 | DOMAINES TECHNIQUES RECHERCHES (Int. Cl. ³) |

**DOCUMENTS CONSIDERES COMME PERTINENTS**

OEB Form 1503.2 06.78